# EUROPEAN PATENT SPECIFICATION

(11) **EP 2 557 058 B1**
(45) Date of publication and mention of the grant of the patent: **02.03.2016**
(21) Application number: 10849480.8
(22) Date of filing: 10.08.2010
(51) Int. Cl.: C01B 31/32, C21C 5/52, C21C 7/00

(54) **LADLE TRANSPORT SYSTEM**
TRANSPORTSYSTEM FÜR GIESSPFANNEN
SYSTÈME DE TRANSPORT DE POCHES

(30) Priority: 09.04.2010 JP 2010090682
(43) Date of publication of application: 13.02.2013
(73) Proprietor: Denka Company Limited, Tokyo 103-8338 (JP)
(72) Inventor: TANIMURA,Kyoichi, Itoigawa-city Niigata 949-0393 (JP); KAMAMOTO,Junpei, Itoigawa-city Niigata 949-0393 (JP); SAGAWA,Masanori, Itoigawa-city Niigata 949-0393 (JP); HOTTA,Humio, Itoigawa-city Niigata 949-0393 (JP)
(74) Representative: Gauer, Pierre
(86) International application number: PCT/JP2010/063557
(87) International publication number: WO 2011/125240

(56) References cited:
- DE-A1- 4 210 387
- JP-A- 4 235 808
- JP-A- 53 008 914
- JP-A- S63 295 458
- JP-A- 2009 041 346
- JP-U- 62 058 256

## Description

### BACKGROUND OF THE INVENTION

The present invention relates to a ladle conveying system, and more particularly to a system for conveying ladles, each of which receives a melted product (calcium carbide) through a tap outlet of a calcium carbide producing furnace, between a product receiving region around the furnace and a product unloading region away from the furnace, by using a wire towing method.

Calcium-carbide (hereafter referred to also as merely "carbide") is produced by heating the mixture of quicklime and coke at 2000°C or more in an electric furnace. The melted product in the furnace is received through a tap outlet by a plurality of ladles sequentially. Then, those ladles are conveyed with bogies to a product unloading region. There, a ceiling crane or the like is used to unload the product from the ladles. After that, the product can be further processed such as cooling and crushing. The ladles, which become empty in the product unloading region, are again fed to the tap outlet to receive the product. The weight of one ladle is about 1400kg, as an example. The weight of a melted carbide as received by one ladle at one time is about 700kg as an example. Further, in a large furnace, it is required to convey approximately 100 ladles at the same time. As a method to convey such a ladle group as very heavy load, JP,51-57487,U, JP,04-235808,A (D1 DE4210387A1) etc. disclose a method in which many bogies for ladles are connected to an endless anchor chain which is arranged to turn along a loop track, and the ladle group is moved on the track by turning the anchor chain by a hydraulic driving apparatus. Although such a chain driving method has a high towing force, there are problems in the method such as huge facility cost and electricity consumption. Therefore, in a relatively small furnace in which around 30 ladles are used, a wire towing method is adopted to tow bogies on which ladles are placed by wires. However, as stated in the full-text JP,51-57487,U, page 1, the last line to page, 2, line 3, "when a wire is used as a towing facility, wires have to be re-hung, which makes the operation very inconvenient," conventional wire methods need to troublesomely replace wires and change tracks as mentioned below.

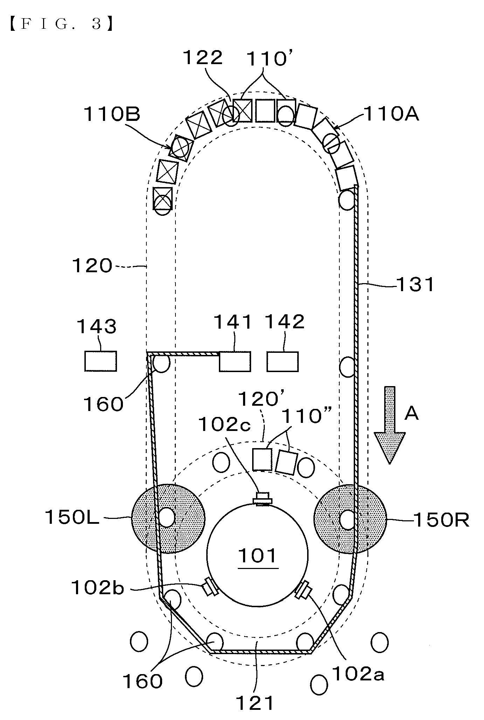

Figs. 3 to 11 are illustrative plan views which schematically show a ladle conveying procedure based on a conventional wire towing method. In Figs. 3 to 11, the reference numeral 101 shows a carbide producing furnace being circular in the horizontal section. The furnace 101 has three tap outlets 102a, 102b, 102c at 120 degree intervals in the circumferential direction. The reference numeral 120 indicates a main track which is laid in an ellipse loop form. Although the lower arc portion of the main track 120 (upper and lower directions is based on Fig. 3 etc.) passes by two outlets 102a, 102b, the portion does not pass by the remaining one tap outlet 102c. For this reason, an arc sub track 120' which passes by the tap outlet 102c is separately laid. The sub track 120' and the lower arc portion of the main track 120 form a product receiving region 121 around the furnace 101. At right and left connections 150L, 150R at which the sub track 120' is connected to the main track 120 track changing mechanisms are installed, respectively. The reference numerals 110A, 110B indicate two sets of ladle groups, each set comprising a plurality of ladles 110' and a plurality of bogies 110' (the reference 110' indicates both of the ladles and the bogies) on each of which each of the ladles 110' is placed. Each of the ladle groups 110A, 110B can be integrally moved because adjacent bogies 110' are linked to each other. In Fig. 3, both of the ladle groups 110A, 110B are in a product unloading region 122 corresponding to the upper arc portion of the main track 120. The ladles 110' of the ladle group 110A are empty, and the ladles 110' of the ladle group 110B have been loaded with products (each of the ladles 110' with the product loaded is represented by the "×" mark). The reference numeral 110" indicates two ladles (with bogies), which are separated from the ladle groups 110A, 110B and disposed before the tap outlet 102c on the sub track 120'. Those ladles 110" are placed there to prepare for in case melted product flows out through the closed tap outlet 102c because of breakage for any reason. The reference numerals 141, 142, 143 indicate winches for reeling and unreeling wires 131, 132, 133. As mentioned later, by reeling the wires 131, 132, 133, each one end of which is connected to the ladle groups 110A, 110B by the winches 141, 142, 143, respectively, the ladle groups 110A, 110B are moved on the main and sub tracks 120, 120'. A reference numeral 160 indicates wire replacing wheels for replacing or re-hanging the wires 131, 132, 133 in the direction in which the ladle groups 110A, B are towed along the main and sub tracks 120, 120'. There are lots of the wire replacing wheels inside and outside the main and sub tracks 120, 120'.

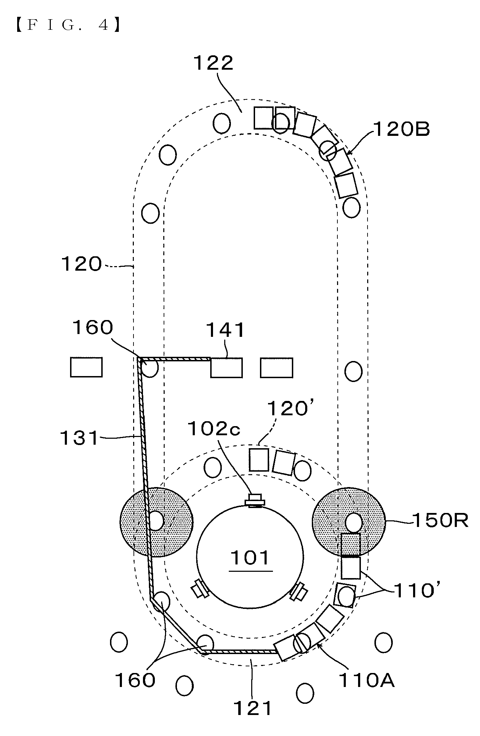

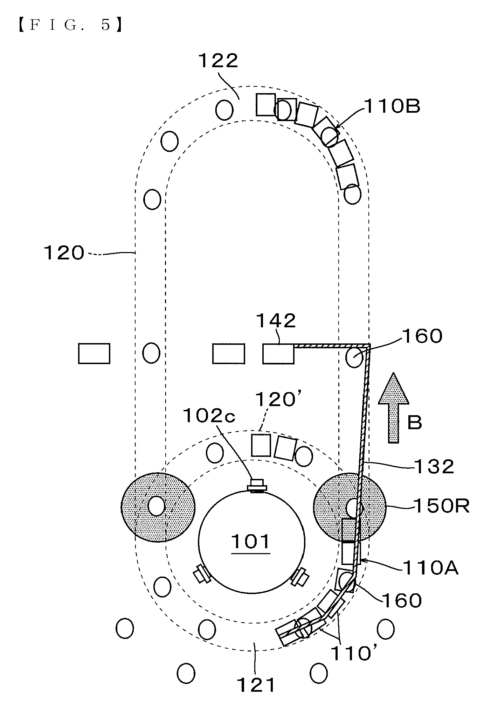

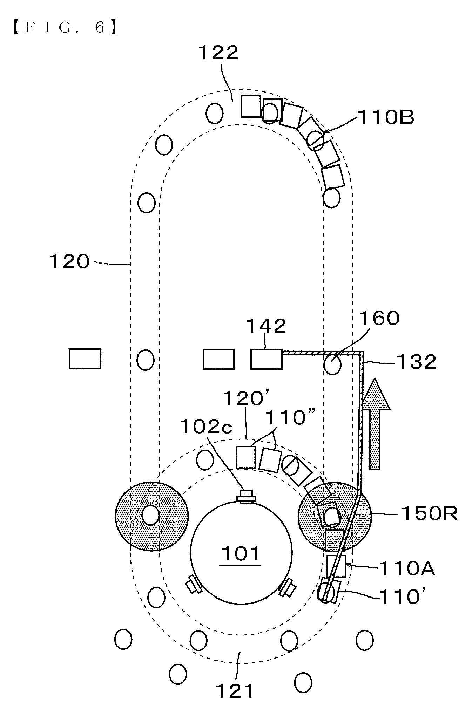

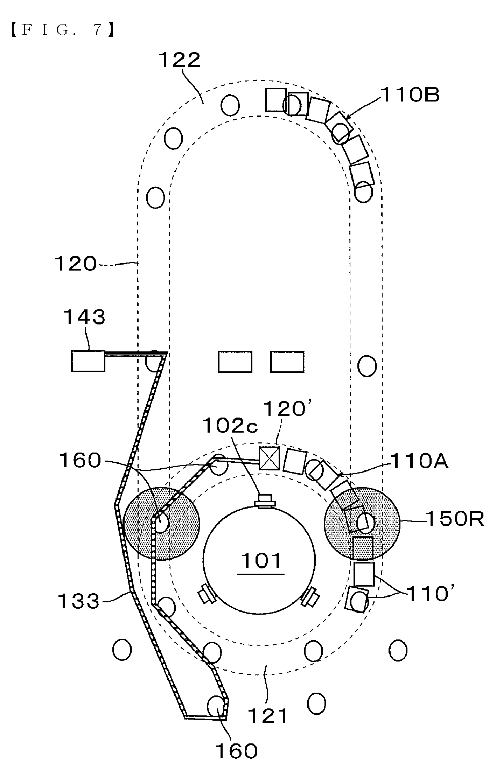

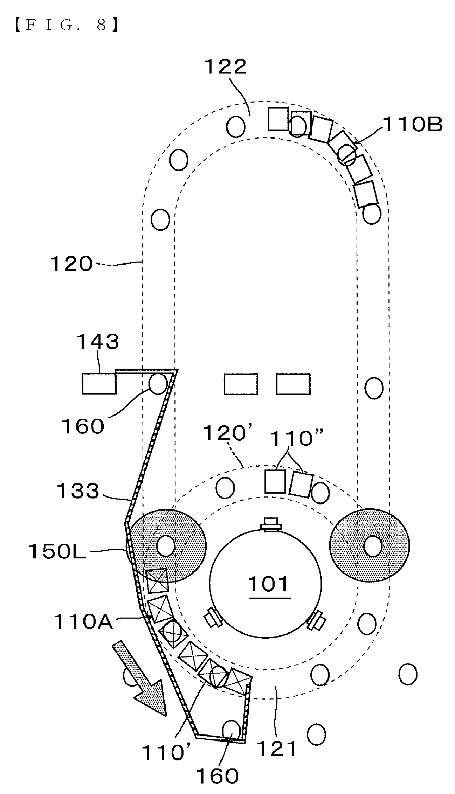

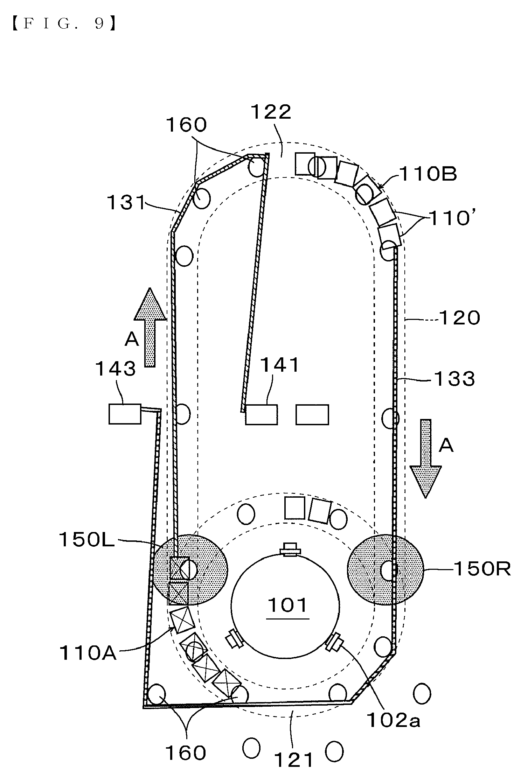

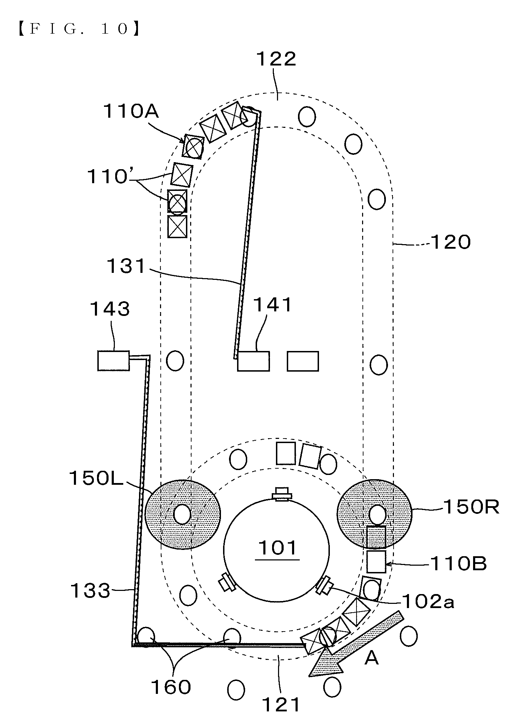

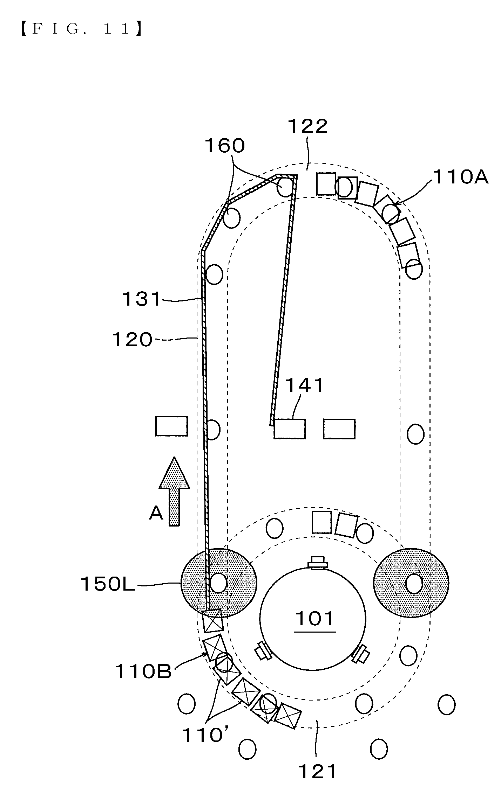

As an example of a conventional wire towing ladle conveyance, a procedure will be explained, wherein the ladle group 110A which is empty as the products have been unloaded in the product unloading region 122 as shown in Fig. 3 is moved to the product receiving region 121 to receive the products through the tap outlet 102c, and then the group 110A is returned to the product unloading region 122. Firstly, as shown in Fig. 3, one end of the wire 131 extending from the winch 141 is connected to the leading bogie 110' in the clockwise direction (A direction) of the ladle group 110A, and the wire 131 is reeled by the winch 141. Thereby, the ladle group 110A is moved in the A direction along the main track 120. At the point where the ladle group 110A passes beyond the right connection 150R (see Fig. 4), the winch 141 is stopped, which stops the movement of the ladle group 110A. The ladle group 110B is unloaded in the product unloading region 122, and the previous wire 131 is taken out from the ladle group 110A. Then, as shown in Fig. 5, one end of the wire 132 extending from the winch 142 is connected to the leading bogie 110' in the A direction (the rearmost part in the counterclockwise direction) of the ladle group 110A. Further, after the track at the right connector 150R is changed to the sub track 120', the wire 132 is reeled by the winch 142. Thereby, as shown in Fig. 6, the ladle group 110A advances from the right connector 150R to the sub track 120' in the counterclockwise direction. Next, the two ladle bogies 110", which have been left for a measure against outlet destruction in front of the tap outlet 102c, are connected and incorporated with the front end of the ladle group 110A in the counterclockwise direction. After that, the wire 132 is taken out. As shown in Fig. 7, one end of the wire 133 extending from the winch 143 is connected to the leading bogie 110' in the counterclockwise direction of the ladle group 110A. Then, the winch 143 is used to intermittently reel the wire 133. While the ladle group 110A is moved along the sub track 120' in the counterclockwise direction, each ladle 110' sequentially receives the melted product from the tap outlet 102c. At this time, the last two ladles and bogies in the counterclockwise direction of the ladle group 110A are separated therefrom and left there with an empty state as a subsequent measure against outlet destruction for the tap outlet 102c (as represented by the reference numeral 110" in Fig. 8). The ladle group 110A with the products are loaded is further towed by the wire 133, and passed through the left connection 150L, which has been changed to the sub track 120' in advance, leading to the lower arc portion in the main track 120, as shown in Fig. 8. Then, the wire 133 is taken out from the ladle group 110A. Next, as shown in Fig. 9, one end of the wire 131 extending from the winch 141 is connected to the leading bogie 110' in the A direction of the ladle group 110A. Further, the left connector 150L is returned to the main track 120. After that, the winch 141 is actuated, and thereby the ladle group 110A is towed to the product unloading region 122 by the wire 131 (see Fig. 10). At the same time, one end of the wire 133 separated from the ladle group 110A is connected to the leading bogie 110' in the A direction of the empty ladle group 110B which is in a waiting state in the product unloading region 122 (see Fig. 9). Then, the winch 143 is actuated, and thereby the ladle group 110B is pulled to the product receiving region 121 by the wire 133 (see Fig. 10). At this time, the right connection 150R has been already returned to the main track 120. The ladle group 110B sequentially receives the products from a tap outlet (here, the tap outlet 102a) serving as a product flow-out opening following the tap outlet 102c. After that, the wire 133 is removed from the ladle group 110B. Then, as shown in Fig. 11, the wire 131 is connected to the ladle group 110B, and the winch 141 is driven. Then, the ladle group 110B with products loaded is unloaded and conveyed to the unloading region 122.

In the conventional wire towing method, as mentioned above, the troublesome operations for replacing wires and changing tracks are needed. Further, the two sets of the ladle groups are moved separately and independently. Therefore, the efficiency of a ladle conveying work is poor, and many workers are required.

[Patent Document 1] JP,S51-57487,U
[Patent Document 2] JP,H04-235808,A

An object of the invention as made in view of the above-mentioned problems is to provide a ladle conveying system based on a wire towing method, where the operations for replacing wires and changing tracks are unnecessary, and the efficiency of a ladle conveying operation can be enhanced.

### SUMMARY OF THE INVENTION

In order to solve the above-mentioned problems, according to the present invention, there is provided a ladle conveying system for conveying a ladle, each of which receives a melted product from tap outlets of a calcium carbide producing furnace, between a product receiving region including the tap outlets and a product unloading region away from the furnace, comprising: a loop track for connecting the product receiving region and the product unloading region; a first ladle group comprising a plurality of ladles and a plurality of bogies, wherein each of ladles is placed on each of the bogies, the bogies can run on the track, and adjacent bogies are linked to each other; a second ladle group, which is disposed opposite to the first ladle group on the track, comprising a plurality of ladles and a plurality of bogies, wherein each of ladles is placed on each of the bogies, the bogies can run on the track, and adjacent bogies are linked to each other; a first wire linked to the leading bogie, in the clockwise direction on the loop track, of the first ladle group; a second wire linked to the leading bogie, in the counterclockwise direction, of the second ladle group; a linkage wire to tightly link the rearmost bogie, in the clockwise direction, of the first ladle group with the rearmost bogie, in the counterclockwise direction, of the second ladle group; a first winch to reel the first wire to move the first ladle group in the clockwise direction along the track from the product receiving region to the product unloading region; and a second winch to reel the second wire to move the second ladle group in the counterclockwise direction along the track from the product receiving region to the product unloading region.

In the invention, when the first ladle group is in the product receiving region, the second ladle group is in the product unloading region. From this state, when the first wire is reeled by the first winch, the first ladle group is towed by the first wire and begins to be moved along the track in the clockwise direction. With this movement of the first ladle group, the linkage wire tows and moves the second ladle group in the clockwise direction. With this movement of the second ladle group, the second winch unreels the second wire. Then, when the first ladle group arrives at the product unloading region, the first winch is stopped. At this time, the second ladle group reaches the product receiving region. When the second ladle group is in the product receiving region, the first ladle group is in the product unloading region. From this state, when the second wire is reeled by the second winch, the second ladle group is towed by the second wire and begins to be moved along the track in the counterclockwise direction. With this movement of the second ladle group, the linkage wire tows and moves the first ladle group in the counterclockwise direction. With this movement of the first ladle group, the first winch unreels the first wire. When the second ladle group arrives at the product unloading region, the second winch is stopped. At this time, the first ladle group reaches the product receiving region. Therefore, the works for replacing wires and for changing tracks are unnecessary. Further, the first and second ladle groups are interlocked via the linkage wire.

In an embodiment of the invention, the calcium carbide producing furnace is circular in the horizontal section and has three tap outlets at 120 degree intervals in the circumferential direction. In this case, the work for taking out the product is carried out through one of the three tap outlets, and in the other two tap outlets, a tap opening work or closing work or the like is carried out, or either of them may be closed

In the invention, the first and second winches can share a single rotary drive source (motor). In this case, it is possible to reduce the cost of a driving mechanism. Moreover, in the invention, the first and second winches can be remotely controlled

In the ladle conveying system according to the present invention configured as stated above, the operations for replacing wires and changing tracks become unnecessary. Further, since the first ladle group and the second ladle group are interlocked via the linkage wire, it is possible to enhance the efficiency of the ladle conveying work and greatly reduce the number of the workers.

### BRIEF DESCRIPTION OF THE DRAWINGS

Fig. 1 is an illustrative plane view that schematically shows a ladle conveying system according to one embodiment of the present invention.
Fig. 2 is an illustrative plane view that schematically shows a situation in which a first ladle group is moved from a situation in Fig. 1 to a product unloading region.
Fig. 3 is an illustrative plane view that schematically shows a ladle conveying procedure based on a conventional wire towing method.
Fig. 4 is an illustrative plane view that schematically shows the ladle conveying procedure based on the conventional wire towing method.
Fig. 5 is an illustrative plane view that schematically shows the ladle conveying procedure based on the conventional wire towing method.
Fig. 6 is an illustrative plane view that schematically shows the ladle conveying procedure based on the conventional wire towing method.
Fig. 7 is an illustrative plane view that schematically shows the ladle conveying procedure based on the conventional wire towing method.
Fig. 8 is an illustrative plane view that schematically shows the ladle conveying procedure based on the conventional wire towing method.
Fig. 9 is an illustrative plane view that schematically shows the ladle conveying procedure based on the conventional wire towing method.
Fig. 10 is an illustrative plane view that schematically shows the ladle conveying procedure based on the conventional wire towing method.
Fig. 11 is an illustrative plane view that schematically shows the ladle conveying procedure based on the conventional wire towing method.

### DETAILED DESCRIPTION OF THE INVENTION

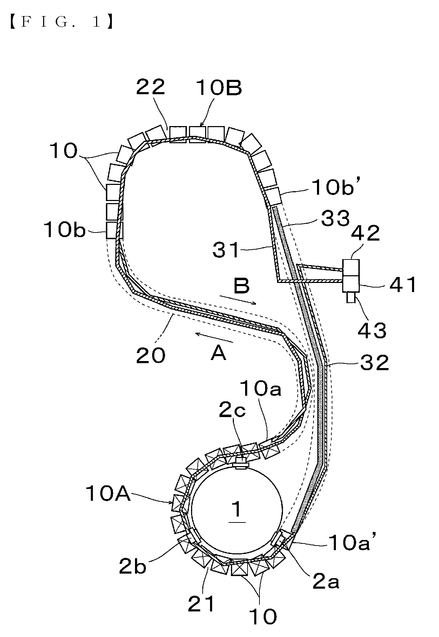

Hereinafter, preferable embodiments of the present invention will be described with reference to the drawings, but the present invention is not limited thereto. Fig. 1 is a plane view schematically showing a ladle conveying system in accordance with an embodiment of the present invention. In in Fig. 1, the reference numeral 1 indicates an electric furnace for producing calcium carbide. The furnace 1 is circular in the horizontal section and has three tap outlets 2a, 2b, 2c at 120 degree intervals in the circumferential direction. This system is to convey ladles 10 between a product receiving region 21 around the furnace 1 that includes the tap outlets 2a, 2b, 2c and a product unloading region 22 away from the furnace 1. The system comprises: a first ladle group 10A and a second ladle group 10B, in which a plurality of the ladles 10 (30 ladles as an example in this embodiment) and a plurality of the bogies corresponding to the ladles 10 in a one-to-one relationship, are divided into two sets, each set including the same number (15) of the ladles and bogies (hereafter, the reference numeral 10 indicates the bogies as well); a distorted loop track 20 for guiding the first and second ladle groups 10A and 10B to travel; and a driving mechanism including wires 31, 32, 33 and winches 41, 42 for moving the first and second ladle groups 10A, 10B along the track 20. In each of the first and second ladle groups 10A and 10B, adjacent two bogies 10 are closely linked, and each ladle group is constructed such that by pulling the leading bogie 10 in the direction of travel, the following bogies are moved together.

The track 20 is laid to connect the product receiving region 21, in which the first ladle group 10A is disposed in Fig. 1 with the product unloading region 22 which is located on the opposite side to the product receiving region 21 on the track 20. The second ladle group 10B is in the region 22 in Fig. 1. The loop of the track 20 may be true circular, ellipsoidal or the like. However, the track 20 can be designed as any loop shape with no corner depending on a track laying environment such as avoiding obstacles. Inside of the track portion corresponding to the product unloading region 22, a product processing space is allocated to cool and crush the product unloaded from the bogies 10 such as by using a ceiling crane (not shown in the drawings) is reserved.

With reference to Fig. 1, an end of the first wire 31 supplied from the first winch 41 is connected to the leading bogie 10A, in the clockwise direction (see the arrow A) (hereafter referred to as "the A direction") on the track 20, of the first ladle group 10A. The first winch 41 is located near the right side track portion (right and left are based on Fig. 1 etc.) between the product receiving region 21 and the product unloading region 22. The first wire 31 extends in the counterclockwise direction (see the arrow B) (hereinafter referred to as merely "the B direction") along the track 20 from the first winch 41, passes under the second ladle group 10B to further extend in the B direction, and then is connected to the first ladle group 10A. An end of the second wire 32 supplied from the second winch 42 is connected to the leading bogie 10b in the B direction of the second ladle group 10B. The second winch 42 is located next to the first winch 41. The second wire 32 extends in the A direction along the track 20 from the second winch 42, passes under the first ladle group 10A to further extend in the A direction, and then is connected to the second ladle group 10B. Further, the rearmost bogie 10a' in the A direction of the first ladle group 10A and the rearmost bogie 10b' in the B direction of the second ladle group 10B are linked by the linkage wire 33 without any slack. The first and second winches 41, 42 share a motor 43 as a single rotatory drive source. Although not shown, each of the winches 41, 42 includes a winch drum for reeling and unreeling the wires 31, 32, a clutch to transmit the output of the motor 43 to the winch drum, and a winch brake to stop the rotation of the winch drum. The motor 43 and the clutches can be remotely controlled to switch ON and OFF. Only when the wire 31 or 32 is reeled, the clutch of the winch 41 or 42 is turned ON, and when the wire 31 or 32 is unreeled, the clutch is turned OFF. Further, when the operation for reeling the wire 31 or 32 is stopped by switching the clutch from ON to OFF, the winch brake is automatically actuated to stop the rotation of the winch drum.

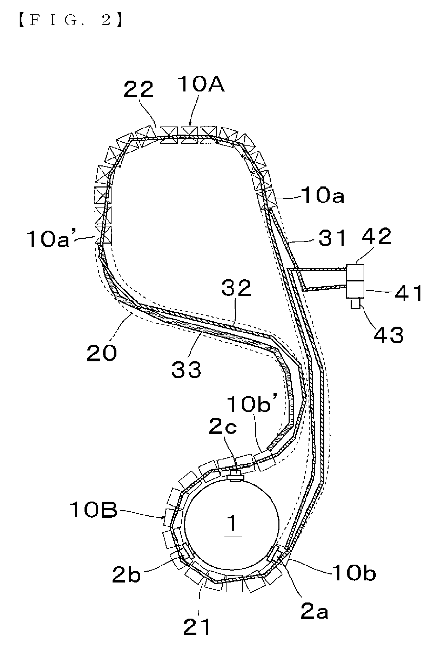

Next, the use of the ladle conveying system as stated above will be described. The work for taking out the product from the electric furnace 1 is carried out through only one of the tap outlets 2a, 2b, 2c. At this time, the other two tap outlets are used for e.g. a tap opening work or a tap closing work, or may be closed. In Fig. 1, the first ladle group 10A in the product receiving region 21 is in a loading state just after the respective ladles 10 have sequentially received the melted products from the tap outlet 2a (the ladle 10 with the product loaded is represented with the mark "×"). On the other hand, the second ladle group 10B in the product unloading region 22 is in an empty state in which the products have been unloaded from the ladles 10. After this, the clutch of the first winch 41 is turned ON by the remote control, and the clutch of the second winch 42 remains OFF (the motor 43 can be turned ON only when it is in the OFF state). The first winch 41 begins to reel the first wire 31, and thereby the first wire 31 tows and moves the first ladle group 10A along the track 20 in the A direction. By the movement of the first ladle group 10A in the A direction, the linkage wire 33 pulls the second ladle group 10B to move it on the track 20 in the A direction. In this way, as the second ladle group 10B moves in the A direction, the second winch 42, which is separated from the output part of the motor 43 with the clutch OFF, automatically releases the second wire 32. Although not shown, a wire tension apparatus is installed to prevent slack in the wires released from the winches. Then, as shown in Fig. 2, when the first ladle group 10A arrives at the product unloading region 22 and the second ladle group 10B reaches the product receiving region 21, the first winch 41 is stopped. Next, while the first winch 41 is intermittently actuated, the second ladle group 10B, from the leading bogie 10A in the A direction, sequentially receive the product through a next tap outlet for receiving the product (for example, the tap outlet 2c). In first ladle group 10A, the work for unloading the product is carried out.

From the Fig. 2 state, to move the first ladle group 10A to the product receiving region 21 and the second ladle group 10B to the product unloading region 22, the second winch 42 is actuated to pull the second ladle group 10B in the B direction via the second wire 42. Thereby, the first ladle group 10A is pulled in the B direction via the linkage wire 33 by the second ladle group 10B. At this time, the first winch 41 releases the first wire.

As stated above, in the ladle conveying system according to this embodiment, it is unnecessary to replace wires or change tracks. Further, the first and second ladle groups 10A, 10B can be interlocked via the linkage wire 33. Therefore, it is possible to enhance the efficiency of the ladle conveying work, and one operator for the driving mechanism would be enough. Moreover, it is possible to remotely control the driving mechanism including the first and second winches 41, 42 and the motor 43.

### DESCRIPTION OF REFERENCE NUMBERS

- 1.: Electric Furnace for Producing Carbide
- 2a, 2b, 2c: Tap outlet
- 10: Ladle (Bogie)
- 10A: First Ladle Group
- 10B: Second Ladle Group
- 20: Track
- 21: Product Receiving Region
- 22: Product Unloading Region
- 31: First Wire
- 32: Second Wire
- 33: Linkage Wire
- 41: First Winch
- 42: Second Winch
- 43: Motor

## Claims

1. A ladle conveying system for conveying ladles (10), each of which receives a melted product from tap outlets (2a,2b,2c) of a calcium carbide producing furnace (1), between a product receiving region (21) including the tap outlets (2a,2b,2c) and a product unloading region (22) away from the furnace (1), comprising:
a loop track (20) for connecting the product receiving region (21) and the product unloading region (22);
a first ladle group (10A) comprising a plurality of ladles (10) and a plurality of bogies, wherein each of the ladles (10) is placed on each of the bogies, the bogies can run on the track (20), and adjacent bogies are linked to each other;
a second ladle group (10B), which is disposed opposite to the first ladle group (10A) on the track (20), comprising a plurality of ladles (10) and a plurality of bogies, wherein each of the ladles (10) is placed on each of the bogies, the bogies can run on the track (20), and adjacent bogies are linked to each other;
a first wire (31) linked to the leading bogie (10b), in the clockwise direction on the loop track (20), of the first ladle group (10A);
a second wire (32) linked to the leading bogie (10b), in the counterclockwise direction, of the second ladle group (10B);
a linkage wire (33) to tightly link the rearmost bogie (10a'), in the clockwise direction, of the first ladle group (10A) with the rearmost bogie (10b'), in the counterclockwise direction, of the second ladle group (10B);
a first winch (41) to reel the first wire (31) to move the first ladle group (10A) in the clockwise direction along the track (20) from the product receiving region (21) to the product unloading region (22); and
a second winch (42) to reel the second wire (32) to move the second ladle group (10B) in the counterclockwise direction along the track (20) from the product receiving region (21) to the product unloading region (22),
wherein, when the first ladle group (10A) is towed by the first wire (31) to move on the track from the product receiving region (21) to the product unloading region (22) in the clockwise direction, the linkage wire (33) tows the second ladle group (10B) to move from the product unloading region (22) to the product receiving region (21) in the clockwise direction, while when the second ladle group (10B) is towed by the second wire (32) to move on the track from the product receiving region (21) to the product unloading region (22) in the counterclockwise direction, the linkage wire (33) tows the first ladle group (10A) to move from the product unloading region (22) to the product receiving region (21) in the counterclockwise direction.

2. The ladle conveying system according to claim 1, wherein the first (41) and second (42) winches share a single rotary drive source.

3. The ladle conveying system according to claim 2, wherein the first (41) and second (42) winches can be remotely controlled.

## Patentansprüche

1. Pfannenbeförderungssystem zum Befördern von Pfannen (10), die jeweils ein Schmelzprodukt aus Abstichlöchern (2a, 2b, 2c) eines Ofens (1) zur Herstellung von Calciumcarbid aufnehmen, zwischen einem Produktaufnahmebereich (21), der die Abstichlöcher (2a, 2b,2c) umfasst, und einem Produktenladebereich (22) entfernt vom Ofen (1), umfassend:
eine Schleifenbahn (20) zum Verbinden des Produktaufnahmebereichs (21) und des Produktentladebereichs (22) ;
eine erste Pfannengruppe (10A), die eine Mehrzahl von Pfannen (10) und eine Mehrzahl von Wagen umfasst, wobei jede der Pfannen (10) auf jedem der Wagen angeordnet ist, die Wagen auf der Bahn (20) laufen können, und benachbarte Wagen miteinander verbunden sind;
eine zweite Pfannengruppe (10B), die gegenüber der ersten Pfannengruppe (10A) auf der Bahn (20) angeordnet ist und eine Mehrzahl von Pfannen (10) und eine Mehrzahl von Wagen umfasst, wobei jede der Pfannen (10) auf jedem der Wagen angeordnet ist, die Wagen auf der Bahn (20) laufen können, und benachbarte Wagen miteinander verbunden sind;
ein erstes Seil (31), das mit dem ersten Wagen (10b) im Uhrzeigersinn auf der Schleifenbahn (20) der ersten Pfannengruppe (10A) verbunden ist;
ein zweites Seil (32), das mit dem ersten Wagen (10b) gegen den Uhrzeigersinn der Schleifenbahn (20) der zweiten Pfannengruppe (10B) verbunden ist;
ein Verbindungsseil (33), das den letzten Wagen (10a') im Uhrzeigersinn der ersten Pfannengruppe (10A) mit dem letzten Wagen (10b') gegen den Uhrzeigersinn der zweiten Pfannengruppe (10B) fest verbindet;
eine erste Winde (41) zum Wickeln des ersten Seils (31), um die erste Pfannengruppe (10A) im Uhrzeigersinn entlang der Bahn (20) vom Produktaufnahmebereich (21) zum Produktentladebereich (22) zu bewegen; und
eine zweite Winde (42) zum Wickeln des zweiten Seils (32), um die zweite Pfannengruppe (10B) gegen den Uhrzeigersinn entlang der Bahn (20) vom Produktaufnahmebereich (21) zum Produktentladebereich (22) zu bewegen,
wobei, wenn die erste Pfannengruppe (10A) durch das erste Seil (31) gezogen wird, um sich auf der Bahn im Uhrzeigersinn vom Produktaufnahmebereich (21) zum Produktentladebereich (22) zu bewegen, das Verbindungsseil (33) die zweite Pfannengruppe (10B) zieht, um sich im Uhrzeigersinn vom Produktentladebereich (22) zum Produktaufnahmebereich (21) zu bewegen, während, wenn die zweite Pfannengruppe (10B) durch das zweite Seil (32) gezogen wird, um sich auf der Bahn gegen den Uhrzeigersinn vom Produktaufnahmebereich (21) zum Produktentladebereich (22) zu bewegen, das Verbindungsseil (33) die erste Pfannengruppe (10A) zieht, um sich gegen den Uhrzeigersinn vom Produktentladebereich (22) zum Produktaufnahmebereich (21) zu bewegen.

2. Pfannenbeförderungssystem nach Anspruch 1, wobei sich die ersten (41) und zweiten (42) Winden eine einzige Drehantriebsquelle teilen.

3. Pfannenbeförderungssystem nach Anspruch 2, wobei die ersten (41) und zweiten (42) Winden ferngesteuert werden können.

## Revendications

1. Système d'acheminement de poches de coulée destiné à acheminer des poches de coulée (10) qui reçoivent chacune un produit fondu de la part de robinets de sortie (2a, 2b, 2c) d'un four de production de carbure de calcium (1), entre une zone de réception de produit (21) qui comprend les robinets de sortie (2a, 2b, 2c) et une zone de déchargement de produit (22) éloignée du four (1), qui comprend :
un chemin en boucle (20) destiné à relier la zone de réception de produit (21) et la zone de déchargement de produit (22) ;
un premier groupe de poches de coulée (10A) qui comprend une pluralité de poches de coulée (10) et une pluralité de bogies, chacune des poches de coulée (10) étant placée sur chacun des bogies, les bogies pouvant se déplacer sur le chemin (20), et les bogies adjacents étant reliés les uns aux autres ;
un second groupe de poches de coulée (10B), qui est disposé de manière opposée au premier groupe de poches de coulée (10A) sur le chemin (20), et qui comprend une pluralité de poches de coulée (10) et une pluralité de bogies, chacune des poches de coulée (10) étant placée sur chacun des bogies, les bogies pouvant se déplacer sur le chemin (20), et les bogies adjacents étant reliés les uns aux autres ;
un premier câble (31) relié au bogie principal (10b), dans le sens des aiguilles d'une montre, sur le chemin en boucle (20), du premier groupe de poches de coulée (10A) ;
un second câble (32) relié au bogie principal (10b), dans le sens inverse des aiguilles d'une montre, du second groupe de poches de coulée (10B) ;
un câble de liaison (33) destiné à relier solidement le bogie arrière (10a'), dans le sens des aiguilles d'une montre, du premier groupe de poches de coulée (10A) au bogie arrière (10b'), dans le sens inverse des aiguilles d'une montre, du second groupe de poches de coulée (10B) ;
un premier treuil (41) destiné à enrouler le premier câble (31) de façon à déplacer le premier groupe de poches de coulée (10A) dans le sens des aiguilles d'une montre le long du chemin (20), entre la zone de réception de produit (21) et la zone de déchargement de produit (22) ; et
un second treuil (42) destiné à enrouler le second câble (32) afin de déplacer le second groupe de poches de coulée (10B) dans le sens inverse des aiguilles d'une montre le long du chemin (20), entre la zone de réception de produit (21) et la zone de déchargement de produit (22),
dans lequel, lorsque le premier groupe de poches de coulée (10A) est tiré par le premier câble (31) afin de se déplacer sur le chemin entre la zone de réception de produit (21) et la zone de déchargement de produit (22) dans le sens des aiguilles d'une montre, le câble de liaison (33) tire le second groupe de poches de coulée (10B) afin de le déplacer entre la zone de déchargement de produit (22) et la zone de réception de produit (21) dans le sens des aiguilles d'une montre, tandis que, lorsque le second groupe de poches de coulée (10B) est tiré par le second câble (32) afin de le déplacer sur le chemin entre la zone de réception de produit (21) et la zone de déchargement de produit (22) dans le sens inverse des aiguilles d'une montre, le câble de liaison (33) tire le premier groupe de poches de coulée (10A) afin de le déplacer de la zone de déchargement de produit (22) vers la zone de réception de produit (21) dans le sens inverse des aiguilles d'une montre.

2. Système d'acheminement de poches de coulée selon la revendication 1, dans lequel le premier (41) et le second (42) treuils partagent une seule source d'entraînement rotative.

3. Système d'acheminement de poches de coulée selon la revendication 2, dans lequel le premier (41) et le second (42) treuils peuvent être commandés à distance.
